# EUROPEAN PATENT SPECIFICATION

(11) **EP 3 237 344 B1**
(45) Date of publication and mention of the grant of the patent: **17.10.2018**
(21) Application number: 15830980.7
(22) Date of filing: 22.12.2015
(51) Int. Cl.: C03B 5/237, C03B 5/235, F27B 3/26, F27D 17/00, F23L 15/04, F28D 21/00, F23L 7/00

(54) **ENERGY-EFFICIENT PROCESS AND INSTALLATION FOR MELTING VITRIFIABLE MATERIAL IN A FLAME FIRED FURNACE**
ENERGIEEFFIZIENTES VERFAHREN UND ANLAGE ZUM SCHMELZEN VON VERGLASBAREM MATERIAL IN EINEM FLAMMENBEFEUERTEN OFEN
PROCESSUS ET INSTALLATION À HAUT RENDEMENT ÉNERGÉTIQUE POUR LA FUSION DE MATIÈRE VITRIFIABLE DANS UN FOUR CHAUFFÉE PAR UNE FLAMME

(30) Priority: 22.12.2014 EP 14307143; 22.12.2014 EP 14307144
(43) Date of publication of application: 01.11.2017
(73) Proprietor: L'Air Liquide Société Anonyme pour l'Etude et l'Exploitation des Procédés Georges Claude, 75007 Paris (FR)
(72) Inventor: JARRY, Luc, 61270 Beaufai (FR); JOUMANI, Youssef, 78121 Crespieres (FR); LEROUX, Bertrand, 91650 Breuillet (FR); TSIAVA, Rémi, 91250 Saint Germain-les-Corbeil (FR); WAGNER, Marc, 94100 Saint Maur des Fosses (FR); BEASSE, Grégoire, 75015 Paris (FR)
(74) Representative: De Vleeschauwer, Natalie Y.L.D.
(86) International application number: PCT/EP2015/081091
(87) International publication number: WO 2016/102629

(56) References cited:
- EP-A1- 2 546 204
- EP-A2- 0 872 690
- WO-A1-2013/010722
- WO-A1-2013/013875
- WO-A2-2008/013843
- ZA-A- 200 304 880
- DATABASE WPI Week 201472 2 October 2014 (2014-10-02) Thomson Scientific, London, GB; AN 2014-S06552 XP002755458, -& WO 2014/157349 A1 (AVANSTRATE INC) 2 October 2014 (2014-10-02)

## Description

The present invention relates to processes and installations for melting vitrifiable material in a flame-fired furnace, such as, in particular, a glass-melting furnace whereby heat evacuated from the furnace together with the combustion flue gas is used for heating the furnace.

Traditionally, flame-fired furnaces for melting vitrifiable material are operated with air as the combustion oxidant, whereby said air may be preheated upstream of the furnace by heat exchange with hot flue gas from the furnace in a regenerator or recuperator.

More recently, the efficiency of furnaces for melting vitrifiable material has been improved by partially or totally substituting the combustion air with oxygen-enriched air or oxygen.

In order to reduce the production costs of molten glass in glass-melting furnaces using oxygen-enriched air or oxygen as combustion oxidant, it has been proposed in inter alia US-A-6071116 and US-B-6250916, to make use of the residual heat contained in the flue gas from the glass-melting furnace for heating the furnace by preheating the oxygen-enriched air or oxygen with said residual heat before the preheated combustion oxidant is introduced into the glass-melting furnace. At the start of the heat-recovery process, the temperature of the flue gas is typically from 1100°C to 1650°C.

At the end of the heat-recovery process, the temperature of the oxygen-rich oxidant can be from 300°C to 650°C.

For reasons of security and reliability, thermal energy is not transferred directly from the hot flue gas to the oxidant, as is the case in combustion air recuperators, but is instead transferred from the hot flue gas to the oxygen-rich combustion oxidant via an intermediate heat transfer fluid, such as air, thereby ensuring that no direct contact can take place between the hot flue gas and the highly reactive oxygen-rich oxidant, even in the case of possible erosion or corrosion of the heat exchange equipment in contact with the particle-laden flue gas and corrosive (hot) oxygen-rich oxidant.

The amount of residual heat from the flue gas which can thus be reutilized in the furnace is limited by the temperature to which the oxygen-rich oxidant can safely be preheated and, when the fuel is also preheated in the heat-recovery process, by the temperature to which the fuel can safely be preheated without deteriorating (e.g. by cracking)

An alternative method of reducing operation costs of industrial processes in which oxygen-enhanced combustion is used, such as cement production, steel reheat applications, glass production, aluminium and copper melting and any industrial process that uses flame-fired process heaters or furnaces, is described in US-A-2009/0308073, whereby waste heat generated by the industrial process is sent as a heat source to an alternative Rankine cycle which converts said waste heat to power which is exported to a utility system, or which is used to reduce power requirements within the installation itself.

An intermediate fluid such as thermal oil, air or pressurized water, may be employed to transfer recoverable heat from the heat source to the working fluid of the alternative Rankine cycle.

According to US-A-2009/0308073, the heat source can be a liquid or gas stream produced either as flue gas as a direct result of oxygen-enhanced combustion or as any stream utilized for cooling within the industrial process itself in order to meet the process needs. The temperature of the heat source is below 600°C, preferably between 400°C and 100°C. The examples relate to cement plants generating kiln exhaust gases with a temperature of 332°C and clinker cooler exhaust gases with a temperature of respectively 403°C and 440°C, as well as to a steel reheat furnace generating a waste heat stream at a temperature of 482°C.

The above method is clearly not suited for efficient power generation from the flue gas of a glass-melting furnace which, as indicated above, leaves the furnace at temperatures well above 1000°C.

It is an aim of the present invention to provide an improved method of valorizing waste heat present in the flue gas from a flame-fired furnace for melting vitrifiable material which is operated with an oxygen-rich combustion oxidant for the heating of said flame-fired furnace. It is a further aim of the present invention to allow more of the waste heat present in the flue gas from a flame-fired furnace to be used for heating the furnace.

According to the invention, this is achieved by means of the following process for melting vitrifiable material such as glass. The process comprises the following steps:
(a) melting vitrifiable material in a flame-fired furnace (1) equipped with electric boost electrodes (4),
(b) recovering heat from hot flue gas evacuated from the furnace by heating a heat transfer fluid by heat exchange between the heat transfer fluid and the hot flue gas;
(c) using the heat recovered from the hot flue gas (7) to heat the flame-fired furnace (1):
   - by preheating at least one reactant selected from oxygen-rich oxidant and fuel by heat exchange between said at least one reactant and the heat transfer fluid heated in step (b), so as to obtain a preheated reactant and supplying the preheated reactant thus obtained as a combustion reactant to the furnace and; and
   - by supplying heat transfer fluid heated in step (b) as a heat source to a Rankine cycle so as to generate mechanical power therefrom, using at least part and preferably all of said mechanical power to produce electricity and supplying at least part of the electricity to the electric boost electrodes (4) of the furnace (1).

Further particulars of the process according to the invention are that:
- in step (b), the temperature of the hot flue gas before heat exchange with the heat transfer fluid is at least 1000°C, preferably between 1000°C and 1350°C;
- in step (b), the heat transfer fluid is heated to a temperature of at least 600°C, preferably of between 600°C and 800°C; and

With the process according to the invention, exploitation of the residual heat present in the hot flue gas evacuated from the furnace for heating said same furnace is optimized and maximized, resulting in a significant reduction of fuel requirements at identical pull rates of the furnace. The combination of preheating either or both the combustion reactants with heat recovery for electric boost further provides additional flexibility in the operation of the furnace, allowing, in particular to take into account changes in the pull rate or tonnage, changes in the composition of the vitrifiable material to be melted and furnace ageing.

In the present context, the term "oxygen-rich oxidant" refers to an oxidant having an oxygen content higher than that of air, preferably containing from 50%vol to 100%vol oxygen.

The term "heat exchange" between two fluids refers to the transfer of heat from one fluid (the heat-source fluid) to a second fluid (the fluid to be heated) without any direct contact or mixing between the two fluids.

The term "heat exchanger" refers to a heating installation or a heating device in which a heat-source fluid, which introduces heat into the heat exchanger, and a fluid to be heated circulate in distinct enclosures or circuits, i.e. without any direct contact or mixing between said fluids, and in which heat is transferred from the heat-source fluid to the fluid to be heated across one or more walls separating the distinct disclosures or circuits.

In the present context, two elements are "in fluid connection" with one another when they are connected so as to enable a fluid to flow from one of the elements to the other, typically by one or more fluid transport conduits.

The term "condensibles" refers to substances present in the furnace flue gas which liquefy or solidify at temperatures in the range from 300°C to 1000°C, in particular in the range of 300°C to 880°C, at pressures in the range of 900 mbar to 1100 mbar. Sodium sulfate, borates and fluorides are examples of such condensibles which may be present in flue gas from a glass-melting furnace.

The term "preheating" refers to the heating of a vitrifiable material or of a combustion reactant before it is introduced into a furnace.

The heat present in the flue gas evacuated from the furnace is called "residual heat" by the person skilled in the art because said heat has been evacuated from the furnace without having been absorbed by the vitrificable material.

In the present context, the term "Rankine cycle" can refer both to the Rankine cycle process and to a Rankine cycle unit for performing a Rankine cycle process.

In step (b) of the process of the invention, the hot flue gas is the heat-source fluid and the heat transfer fluid is the fluid to be heated. In step (b), the heat transfer fluid is heated by heat exchange with the hot flue gas in a heat exchanger, known in the art as a "recuperator", and hereafter referred to as the primary heat exchanger.

In the reactant preheating part of step (c), the heated heat transfer fluid is the heat-source fluid and the reactant is the fluid to be heated.

In the Rankine part of step (c) the heated heat transfer fluid is again the heat-source fluid and the working fluid of the Rankine cycle (see below) is the fluid to be heated.

It is an advantage of the present invention that more thermal energy recovered from the hot flue gas can be used for heating the furnace.

According to one preferred embodiment of the process according to the invention, in step (c), the heat transfer fluid heated in step (b) is first used to preheat the at least one reactant and is then supplied as a heat source to the Rankine cycle.

In that case, one obtains after the preheating of the at least one reactant the at least one preheated reactant and a tempered heat transfer fluid at a temperature of at most 650°C, preferably from 200°C to 650°C. The tempered heat transfer fluid is then supplied to the Rankine cycle. The temperature of the tempered heat transfer fluid after the preheating of the at least one reactant may usefully be not more than 400°C, preferably from 200°C to 400°C.

According to an alternative embodiment, in step (c), the heat transfer fluid heated in step (b) is first supplied as a heat source to the Rankine cycle so as to generate mechanical power and obtain a tempered heat transfer fluid, and the tempered heat transfer fluid is then used to preheat the at least one reactant.

According to one advantageous embodiment, the heating of the heat transfer fluid in step (b) and the preheating of the reactant(s) in step (c) take place in separate heat transfer installations. In that case, the heating of the heat transfer fluid takes place in the abovementioned primary heat exchanger, whereas the preheating of the reactant(s) takes place in a separate heat exchanger hereafter referred to as "secondary heat exchanger".

The heat transfer fluid is preferably a gaseous heat transfer fluid. Examples of useful gaseous heat transfer fluids are air, CO₂, N₂ or mixtures of at least two of these gases. Air is usually preferred as a heat transfer fluid due to its safety and availability.

Step (c) preferably includes preheating both oxygen-rich oxidant and fuel. Both the preheated oxygen-rich oxidant and the preheated fuel are then advantageously supplied as combustion reactants to the furnace.

Two distinct secondary heat exchangers may be used for preheating the reactants: a secondary oxidant heat exchanger for preheating the oxygen-rich oxidant and a secondary fuel heat exchanger for preheating the fuel.

The secondary oxidant heat exchanger and the secondary fuel heat exchanger may be disposed in series or in parallel (with respect to the flow of the heat transfer fluid). They are preferably disposed in series with the secondary oxidant heat exchanger advantageously preceding the secondary fuel heat exchanger although it is also possible to preheat the two reactants in the reverse order.

It is also possible to preheat oxygen-rich oxidant and fuel in one specifically designed secondary heat exchanger, such a secondary heat exchanger having separate circulation paths or flow paths for the oxygen-rich oxidant and for the fuel.

Fuels suitable for use in the process according to the invention include gaseous fuels, such as natural gas, wood gas, coal gas or syngas, liquid fuels, such as fuel oil, including light and heavy fuel oil, and solid fuels, such as particulate coal and petcoke.

A combination of different fuels may also be burnt in the furnace. Solid fuels are typically injected into the furnace as fluid-propelled or fluid-entrained particulate solid fuel, whereby the fluid may be liquid or gaseous. In that case, the preheating of the fuel in step (c) of the process may take the form of preheating the fluid-entrained solid fuel as such, for example, in the case of a liquid-entrained solid fuel, the preheating of the slurry, or, alternatively, the form of preheating the gaseous or liquid entrainment fluid before it is used to propel or entrain the particulate solid fuel.

When liquid fuel is injected into the furnace by means of gas-assisted atomization, the preheating of the fuel in step (c) of the process may take the form of preheating the liquid fuel before its atomization, the preheating of the gas before it is used for the atomization gas-assisted atomization of the liquid fuel, or the preheating of both the liquid fuel and the gas. When the liquid fuel is highly viscous, preheating the liquid fuel also has the advantage of lowering its viscosity.

The oxygen-rich oxidant advantageously has an oxygen content of from 80%vol to 100%vol, preferably of at least 90%vol, more preferably of at least 95%vol, most preferably of at least 98%vol.

Examples of temperature ranges to which a combustion reactant may be preheated in step (c) are listed in table 1.

**Table 1**

| **Reactant** | **Preheating Temperature [°C]** |
|---|---|
| Oxidant with 70 to 89%vol oxygen | 300°C to 700°C |
| Oxidant with 90 to 100%vol oxygen | 300°C to 650°C |
| Natural gas | 200°C to 550°C |

When the fuel is a gaseous fuel, it is preferably preheated to at least 400°C in step (c). When the fuel is a liquid fuel, the liquid fuel is itself preferably preheated to at least 100°C. The maximum preheating temperature of the fuel is selected so that it is below the temperatures at which the fuel in question is subjected to thermal degradation, for example by fuel cracking.

Different types of Rankine cycles may be used in the process according to the invention. The Rankine cycle may, for example, use water/steam as its working fluid. The Rankine cycle may also use an organic fluid, such as n-pentane or toluene, as its working fluid. The nature of the working fluid is typically selected in function of the temperature range in which the Rankine cycle must operate, this temperature being at least in part determined by the temperature at which the heat-transfer fluid is supplied as heat-source fluid to the Rankine cycle in step (c). In said step (c), the heat-transfer fluid typically heats the working fluid of the Rankine cycle, i.e. the fluid to be heated, in a further heat exchanger, referred to as "tertiary heat exchanger".

The mechanical power generated by the Rankine cycle in step (c) is, at least in part, used to produce electricity. According to the present invention at least part of the electricity produced is used to generate electric boosting in the glass-melting furnace and is therefore supplied to electric boosting electrodes in the furnace.

When the Rankine cycle generates more mechanical power than required for generating the electricity for electric boosting, the additional powermay be used in a wide range of applications, whereby uses which reduce the energy requirements/dependency of the furnace/of the melting process are preferred.

The additional mechanical power generated by the Rankine cycle may for example be used to (help) compress the oxygen-rich oxidant before it is supplied to the furnace or, if the oxygen-rich oxidant is preheated in step (c), to (help) compress the oxygen-rich oxidant before it is preheated.

The process of the present invention is suitable for essentially all types flame-fired glass-melting furnaces, such as furnaces for the production of flat glass, furnaces for the production of container glass, for the production of glass tableware, etc., and for all sizes of flame-fired glass-melting furnaces, for example with pull rates ranging from 100 to 800 tpd of molten glass.

The present invention also relates to an installation for melting vitrifiable material, such as glass, suitable for use in the process as described above.

Said installation for melting vitrifiable material comprises a flame-fired melting furnace having a flue gas exhaust, at least one fuel inlet, at least one combustion oxidant inlet and electric boost electrodes.

The installation also comprises a primary heat exchanger having a flue gas inlet, a flue gas outlet, a heat transfer fluid inlet and a heat transfer fluid outlet.

The installation further includes a secondary heat exchanger having a heat transfer fluid inlet, a heat transfer fluid outlet, a reactant inlet and a reactant outlet.

In addition, a Rankine cycle for generating mechanical power and an electricity generator are also part of the installation according to the invention, whereby the Rankine cycle is adapted to operate with a working fluid and comprises a tertiary heat exchanger.

The primary heat exchanger is adapted to heat the heat transfer fluid by heat exchange with the flue gas from the furnace.

Thereto, the flue gas inlet of the primary heat exchanger is in fluid connection with the flue gas exhaust of the furnace. Its heat transfer fluid inlet is in fluid connection with a source of heat transfer fluid.

The secondary heat exchanger is adapted to preheat at least one reactant selected from oxygen-rich oxidant and fuel by heat exchange with the heat transfer fluid. Thereto, the heat transfer fluid inlet of the secondary heat exchanger is in fluid connection with the heat transfer fluid outlet of the primary heat exchanger. The reactant inlet of the secondary heat exchanger is in fluid connection with a source of the reactant. If the reactant is oxygen-rich oxidant, the reactant outlet of the secondary heat exchanger is in fluid connection with a combustion oxidant inlet of the furnace, for example: a combustion oxidant inlet of one or more burners of the furnace. If the reactant is fuel, the reactant outlet of the secondary heat exchanger is in fluid connection with a fuel inlet of the furnace.

The secondary heat exchanger may also comprise multiple reactant inlets and multiple reactant outlets, for example an oxygen-rich oxidant inlet in fluid connection with a source of oxygen-rich oxidant and an oxygen-rich oxidant outlet in fluid connection with a combustion oxidant inlet of the furnace, as well as a fuel inlet in fluid connection with a fuel source and a fuel outlet in fluid connection with a fuel inlet of the furnace.

As explained above with respect to the process according to the invention, when the fuel is a fluid-entrained or fluid-propelled particulate solid fuel, the secondary heat exchanger may comprise an inlet for the fluid-entrained or - propelled solid fuel in fluid connection with a source of fluid-propelled or -entrained solid fuel and an outlet for said fluid-entrained or -propelled solid fuil in fluid connection with a fuel inlet of the furnace. Alternatively, the secondary heat exchanger may comprise an inlet for the entrainment fluid used for entraining or propelling the solid fuel in fluid connection with a source of said entrainment fluid and an outlet for said entrainment fluid, whereby said fluid outlet is in fluid connection with a fuel inlet of the furnace via a device for mixing the fluid with the particulate solid fuel.

When the fuel is a liquid fuel, the secondary heat exchanger may comprise an inlet for the liquid fuel in fluid connection with a source of said liquid fuel and a liquid fuel outlet in fluid connection with a fuel inlet of the furnace, said fuel inlet being typically equipped with an atomizer for generating a spray of the preheated liquid fuel, whereby said atomizer may be gas assisted or not. Alternatively or in combination with the above, when a gas-assisted atomizer is used for generating a spray of liquid fuel in the furnace, the secondary heat exchanger may comprise an inlet for the atomization gas used for generating said spray, in fluid connection with a source of said atomization gas, as well as an outlet for said atomization gas, whereby said gas outlet is in fluid connection via a fuel inlet of the furnace equipped with a gas-assisted fuel atomizer.

The tertiary heat exchanger of the Rankine cycle is adapted for heating the working fluid by heat exchange with the heat transfer fluid. Said tertiary heat exchanger presents a heat transfer fluid inlet, a heat transfer fluid outlet, a working fluid inlet and a working fluid outlet.

The electricity generator is connected to the Rankine cycle and is adapted to transform at least part of the mechanical power generated by the Rankine cycle into electricity. The electricity generator is further connected to the boosting electrodes so as to permit supplying generated electricity thereto.

According to a preferred embodiment the heat transfer fluid inlet of the secondary heat exchanger is in fluid connection with the heat transfer fluid outlet of the primary heat exchanger and the heat transfer outlet of the secondary heat exchanger is in fluid connection with the heat transfer fluid inlet of the tertiary heat exchanger.

Alternatively, the heat transfer fluid inlet of the tertiary heat exchanger may be in fluid connection with the heat transfer fluid outlet of the primary heat exchanger with the heat transfer outlet of the tertiary heat exchanger being in fluid connection with the heat transfer fluid inlet of the secondary heat exchanger.

Specific embodiments described hereabove with respect to the process of the invention also apply to the installation of the invention.

Thus, the source of heat transfer fluid may be a source of a heat transfer fluid selected among the group of air, CO₂, N₂ or mixtures of at least two of gases.

The source of heat transfer fluid is advantageously a source of a gaseous heat transfer fluid. For example, when the heat transfer fluid is air, the source of heat transfer fluid may be an air pump or compressor with which the heat-transfer fluid inlet of the primary heat exchanger is in fluid connection.

According to one embodiment of the installation according to the invention, the secondary heat exchanger is adapted to preheat both oxygen-rich oxidant and fuel by heat exchange with the heat-transfer fluid. Said secondary heat exchanger has a first reactant inlet and a second reactant inlet, as well as a first reactant outlet and a second reactant outlet. The first reactant inlet is in fluid connection with a source of oxygen-rich oxidant. The first reactant outlet is in fluid connection with a combustion oxidant inlet of the furnace. The second reactant inlet is in fluid connection with a fuel source. The second reactant outlet is in fluid connection with a fuel inlet of the furnace.

According to another embodiment, the oxygen-rich oxidant and the fuel are preheated in separate heat exchangers. The installation then comprises a first secondary heat exchanger which is a secondary oxidant heat exchanger and a second secondary heat exchanger which is a secondary fuel heat exchanger. The first secondary heat exchanger, i.e. the secondary oxidant heat exchanger, has a reactant inlet in fluid connection with a source of oxygen-rich oxidant as well as a reactant outlet in fluid connection with a combustion inlet of the furnace. The second secondary heat exchanger, i.e. the secondary fuel heat exchanger, has a reactant inlet in fluid connection with a source of fuel and a reactant outlet in fluid connection with a fuel inlet of the furnace.

As mentioned above, the secondary oxidant heat exchanger and the secondary fuel heat exchanger may be disposed in parallel or in series with respect to the flow of the heat transfer fluid. A disposition in series is considered particularly useful, especially when the secondary oxidant heat exchanger precedes the secondary fuel heat exchanger, although the reverse order is also possible.

The source of fuel is a source of gaseous fuel, of liquid fuel or of solid fuel. When the fuel is to be preheated in a secondary heat exchanger, the fuel to be preheated is preferably a gaseous fuel or a liquid fuel.

The source of oxygen-rich oxidant is a source of an oxidant having an oxygen content higher than that of air (which is 21%vol) and advantageously between 50%vol and 100%vol. The oxygen-rich oxidant supplied by said source usefully has an oxygen content of at least 80%vol%vol, preferably of at least 90%vol, more preferably of at least 95%vol and most preferably of at least 98%vol.

Examples of such sources are air separation units, oxygen pipelines and liquid-oxygen reservoirs.

The working fluid of the Rankine cycle may be water/steam. It may also be an organic working fluid.

The nature of the working fluid is selected in function of the temperature range at which the Rankine cycle operates, certain organic working fluids being, for example, particularly efficient for Rankine cycles operating at lower temperature ranges.

If more mechanical power than necessary for electric boosting is generated by the Rankine cycle, some of the generated mechanical power may be used to compress the oxygen-rich oxidant before it is supplied as a combustion reactant to the furnace. When, as is preferred, the oxygen-rich oxidant is preheated in step (c) of the process, said surplus mechanical power is preferably used to compress the oxygen-rich oxidant before it is preheated. Indeed, certain sources of oxygen-rich oxidant such as VSA (Vacuum Swing Adsoption) air separation units frequently generate oxydant-rich oxidant at a pressure which is too low for the use of said oxygen-rich oxidant as a combustion reactant in the furnace.

The installation is of particular interest when the furnace is a glass-melting furnace. As mentioned above, the present invention is applicable to essentially all flame-fired glass-melting furnaces. A glass-melting furnace of the installation may thus be a furnace for the production of flat glass, a furnace for the production of container glass, a furnace for the production of glass tableware, etc. The pull rate of such a glass-melting furnace may, for example, range from 100 to 800 tpd of molten glass.

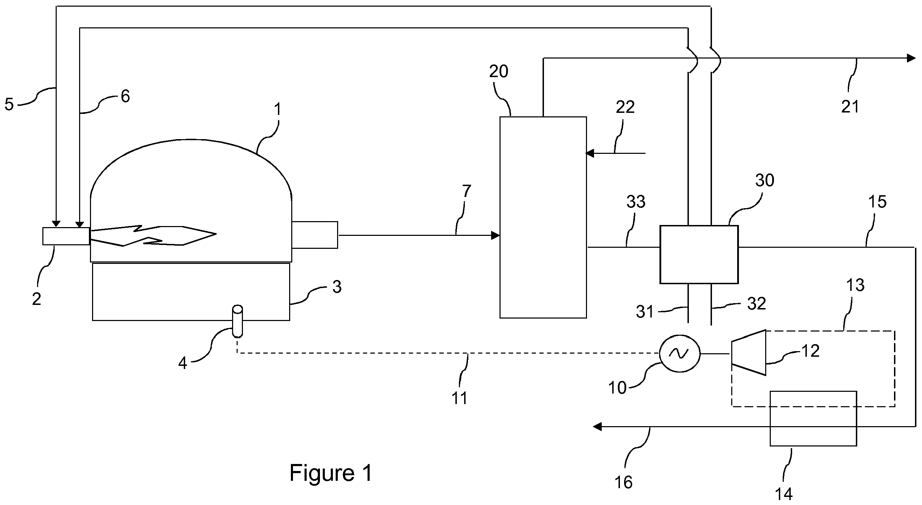

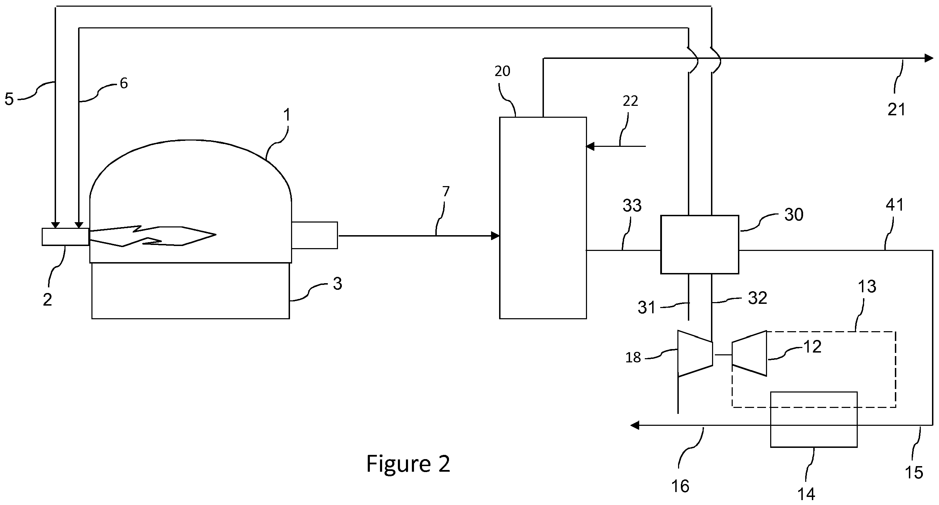

The present invention and its advantage are illustrated in the following examples, reference being made to figures 1 and 2 which are schematic representations of glass-melting installations according to the present invention.

Figure 1 shows a flame-fired glass-melting furnace 1. Said furnace is equipped with a number of oxy-fuel burners 2 (only one burner is show). The flue gas 7 evacuated from furnace 1 is supplied to the flue gas inlet of primary heat exchanger 20. Simultaneously, a heat transfer fluid 22 (in casu air) is supplied to primary heat exchanger 20 via a heat transfer fluid inlet.

Inside primary heat exchanger 20, said heat transfer fluid 22 is heated to a temperature of 700°C by heat exchange with hot flue gases 7.

The tempered flue gas 21 leaves primary heat exchanger 20 via its flue-gas outlet and is sent to a flue gas treatment installation (not shown) before being sent to the stack (not shown).

The heated heat-transfer fluid 33 is evacuated from primary heat exchanger 20 via its heat-transfer fluid outlet and introduced into secondary heat exchanger 30 via the heat-transfer fluid inlet of the latter.

Secondary heat exchanger 30 is a multiflux heat exchanger having an oxidant inlet and an oxidant outlet as well as a fuel inlet and a fuel outlet.

In secondary heat exchanger 30, oxygen-rich oxidant 32 having an oxygen content of from 90% vol to 100% vol and gaseous fuel 31 such as natural gas are preheated by heat exchange with the hot heat transfer fluid 33. The thus preheated oxygen-rich oxidant 5 and gaseous fuel 6 are supplied to oxy-burners 2 of the furnace 1 so as to generate combustion and therefore heat within furnace 1, said heat being used to melt solid glass-making materials and generate a glass-melt bath in the glass tank 3 situated in the lower part of furnace 1.

It will be appreciated that, instead of multi-flux heat exchanger 30, it is equally possible to use two distinct secondary heat exchangers (in series or in parallel with respect to the flow of the heat transfer fluid), a first secondary heat exchanger being used to preheat the oxygen-rich oxidant 32, the second secondary heat exchanger being used to preheat the (gaseous) fuel 31.

In accordance with the present invention, the residual heat present in the heat-transfer fluid 15 leaving the secondary heat exchanger, for example at about 400°C, is exploited and used to heat a working fluid 13 of a Rankine cycle in tertiary heat exchanger 14.

By means of the power unit 12 of the Rankine cycle, the heat thus absorbed by working fluid 13 is used to generate mechanical power. Said mechanical power is then transformed into electrical power by electricity generator 10, said electrical power being supplied to the boosting electrodes 4 located in the melt basin 3 of furnace 1 (only a single electrode is shown) so as to provide electric boosting energy to the glass melt, thereby improving the efficiency of the said furnace 1.

Figure 2 shows a glass-melting installation similar to the one shown in figure 1, except that the hot heat transfer fluid 33 is first supplied to the Ranking cycle as a heat source, whereafter the tempered heat transfer fluid 15 leaving the Rankine cycle is introduced as a heat-source fluid into secondary heat exchanger 30

### Example

3400 Nm/h industrial oxygen, of 95% purity, at 550°C and 1500 Nm3/h of natural gas (6) at 450°C are supplied to a glass furnace equipped with 10 burners for producing 440 tpd of soda-lime silica glass. The glass tank is also heated with 1600 kWe generated by means of electrodes. The fumes leave the furnace (1) at 1400°C. Following dilution with ambient air, fumes with a volume of 7400 Nm3/h at 1250°C are obtained. Two primary heat exchangers, one located next to each side wall of the furnace, allow heating a stream of 9200 Nm3/h ambiant air to at 700°C. The fumes leave said primary heat-exchangers at 850°C. The generated hot air stream flows into two sets of secondary heat exchangers, one set on each side of the furnace. Each set comprises an oxygen and a natural gas heat-exchanger operated in series. Oxygen and natural gas are supplied by a valve train to the secondary heat-exchangers at a pressure around 100 to 1000 mbars.

The air streams exit the sets of secondary heat exchangers on each side at a temperature of 250°C to 300°C. The residual thermal energy of this air is around 880 kW to 950 kWth.

The organic fluid of the Rankine cycle extracts heat from these air streams at 100°C to 200°C and transforms this extracted heat into mechanical energy in an expander. The electric generator connected to said expander can recover up to 25% of the inlet energy, i.e. 219 kWe. In this case, the Organic Rankine Cycle provides 14% of the electricity needed for electric boosting. At 105 €/MWh, the electricity generated via the Rankine cycle leads to a yearly cost reduction of 202356 €.

## Claims

1. Process for melting vitrifiable material comprising the steps of:
a) melting vitrifiable material in a flame-fired furnace (1) equipped with electric boost electrodes (4),
b) recovering heat from hot flue gas (7) evacuated from the furnace (1) at a temperature of at least 1100°C, preferably of between 1100°C and 1500°C by heating a heat transfer fluid (22) to a temperature of at least 600°C, preferably between 600°C and 800°C, by heat exchange between the heat transfer fluid and said hot flue gas (7); and
c) using the heat recovered from the hot flue gas (7) in step (b) to heat the flame-fired furnace (1):
• by preheating at least one reactant selected from oxygen-rich oxidant (32) and fuel (31) by heat exchange between said at least one reactant (32, 31) and the heat transfer fluid (33) heated in step (b), so as to obtain a preheated reactant (5, 6) and supplying the preheated reactant (5, 6) thus obtained as a combustion reactant to the furnace (1), and
• by supplying heat transfer fluid (33) heated in step (b) as a heat source to a Rankine cycle so as to generate mechanical power therefrom, using at least part and preferably all of said mechanical power to produce electricity and supplying at least part of the electricity to the electric boost electrodes (4) of the furnace (1).

2. Process according to claim 1 whereby, in step (c), the heat transfer fluid (33) heated in step (b) is first used to preheat the at least one reactant, thereby obtaining at least one preheated reactant and tempered heated heat transfer fluid (15) at a temperature of at most 650°C, preferably from 200°C to 650°C, and whereby thereafter the tempered heated heat transfer fluid (15) is supplied as a heat source to the Rankine cycle.

3. Process according to claim 1 whereby, in step (c), the heat transfer fluid (33) heated in step (b) is first supplied as a heat source to the Rankine cycle so as to generate mechanical power and obtain a tempered heated heat transfer fluid, and whereby thereafter the tempered heated heat transfer fluid is used to preheat the at least one reactant.

4. Process according to claim 1 or 2, whereby the heating of the heat transfer fluid in step (b) and the preheating of the reactant in step (c) take place in separate heat transfer installations (20, 30).

5. Process according to any one of the preceding claims, whereby the heat transfer fluid (22, 33, 15) is a gaseous heat transfer fluid.

6. Process according to any one of the preceding claims, whereby step (c) comprises preheating both oxygen-rich oxidant (32) and fuel (31) and whereby thereafter both the preheated oxygen-rich oxidant (5) and the preheated fuel (6) are supplied as combustion reactants to the furnace (1).

7. Process according to any one of the preceding claims, whereby the oxygen-rich oxidant (32, 5) has an oxygen content of from 80%vol to 100%vol, preferably of at least 90%vol, more preferably of at least 95%vol, most preferably of at least 99%vol.

8. Process for melting glass according to any of the preceding claims.

9. Installation for melting vitrifiable material comprising:
• a flame-fired melting furnace (1) having a flue gas exhaust, at least one fuel inlet,at least one combustion oxidant inlet and electric boost electrodes,
• a primary heat exchanger (20) having a flue gas inlet, a flue gas outlet, a heat transfer fluid inlet and a heat transfer fluid outlet, the flue gas inlet being in fluid connection with the flue gas exhaust of the furnace (1), the heat transfer fluid inlet being in fluid connection with a source of heat transfer fluid, the primary heat exchanger (20) being adapted to heat the heat transfer fluid (22) by heat exchange with the flue gas (7) from the furnace (1),
• a secondary heat exchanger (30) having a heat transfer fluid inlet, a heat transfer fluid outlet, a reactant inlet and a reactant outlet, the reactant inlet being in fluid connection with a source of a reactant selected from oxygen-rich oxidant (32) and fuel (31), the secondary heat exchanger (30) being adapted to preheat the reactant (32, 31) by heat exchange with the heat transfer fluid (33), whereby, if the reactant is fuel (31), the reactant outlet is in fluid connection with a fuel inlet of the furnace (1) and whereby if the reactant is oxygen-rich oxidant (32), the reactant outlet is in fluid connection with a combustion oxidant inlet of the furnace (1),
• a Rankine cycle for generating mechanical power and operating with a working fluid (13) and comprising a tertiary heat exchanger (14) having a heat transfer fluid inlet, a heat transfer fluid outlet, a working fluid inlet and a working fluid outlet, the heat transfer inlet of the tertiary heat exchanger (14) being in fluid connection with the heat transfer fluid outlet of the secondary heat exchanger (30), the tertiary heat exchanger (14) being adapted for heating the working fluid (13) by heat exchange with the heat transfer fluid (15),
• an electricity generator (10) connected to the Rankine cycle and adapted to transform at least part of the generated mechanical power into electricity
whereby the electricity generator (10) is connected to the boosting electrodes so as to supply electricity thereto and
whereby either:
• the heat transfer fluid inlet of the secondary heat exchanger (30) is in fluid connection with the heat transfer fluid outlet of the primary heat exchanger (20) and the heat transfer outlet of the secondary heat exchanger (30) is in fluid connection with the heat transfer fluid inlet of the tertiary heat exchanger (14), or
• the heat transfer fluid inlet of the tertiary heat exchanger (14) is in fluid connection with the heat transfer fluid outlet of the primary heat exchanger (20) and the heat transfer outlet of the tertiary heat exchanger (14) is in fluid connection with the heat transfer fluid inlet of the secondary heat exchanger (30).

10. Installation according to claim 9, whereby the source of heat transfer fluid (22) is a source of a gaseous heat transfer fluid.

11. Installation according to claim 9 or 10, whereby the secondary heat exchanger (30) has a first reactant inlet, a second reactant inlet, a first reactant outlet and a second reactant outlet, the first reactant inlet being in fluid connection with a source of oxygen-rich oxidant (32) and the second reactant inlet being in fluid connection with a source of fuel (31), the secondary heat exchanger (30) being adapted to preheat the oxygen-rich oxidant (32) and the fuel (31) by heat exchange with the heat transfer fluid (33), whereby the first reactant outlet is in fluid connection with a combustion oxidant inlet of the furnace (1) and the second reactant outlet is in fluid connection with a fuel inlet of the furnace (1).

12. Installation according to any one of claims 9 to 11, comprising a secondary oxidant heat exchanger and a secondary fuel heat exchanger,
- the secondary oxidant heat exchanger having a reactant inlet in fluid connection with a source of oxygen-rich oxidant and a reactant outlet in fluid connection with a combustion oxidant inlet of the furnace (1),
- the secondary fuel heat exchanger having a reactant inlet in fluid connection with a source of fuel and a reactant outlet in fluid connection with a fuel inlet of the furnace (1).

13. Installation according to any one of claims 9 to 12, whereby the furnace (1) is a glass-melting furnace.

## Patentansprüche

1. Verfahren zum Schmelzen von verglasbarem Material, umfassend die Schritte:
a) Schmelzen von verglasbarem Material in einem flammenbefeuerten Ofen (1), der mit elektrischen Booster-Elektroden (4) ausgestattet ist,
b) Rückgewinnen von Wärme aus heißem Rauchgas (7), das aus dem Ofen (1) bei einer Temperatur von mindestens 1100 °C, vorzugsweise zwischen 1100 °C und 1500 °C durch Erwärmen eines Wärmeübertragungsfluids (22) auf eine Temperatur von mindestens 600 °C, vorzugsweise zwischen 600 °C und 800 °C, durch Wärmeaustausch zwischen dem Wärmeübertragungsfluid und dem heißen Rauchgas (7) evakuiert wird; und
c) Verwenden der Wärme, die aus dem heißen Rauchgas (7) in Schritt (b) zurückgewonnen wurde, zum Erwärmen des flammenbefeuerten Ofens (1):
• durch Vorwärmen mindestens eines Reaktionsmittels, das ausgewählt ist aus sauerstoffreichem Oxidationsmittel (32) und Brennstoff (31), durch Wärmeaustausch zwischen dem mindestens einen Reaktionsmittel (32, 31) und dem Wärmeübertragungsfluid (33), das in Schritt (b) erwärmt wurde, um ein vorgewärmtes Reaktionsmittel (5, 6) zu erhalten, und um das so erhaltene vorgewärmte Reaktionsmittel (5,6) als ein Verbrennungsreaktionsmittel dem Ofen (1) zuzuführen, und
• durch Zuführen von Wärmeübertragungsfluid (33), das in Schritt (b) erwärmt wurde, als Wärmequelle für einen Rankine-Kreislauf, um daraus mechanische Leistung zu erzeugen, unter Verwendung mindestens eines Teils und vorzugsweise der gesamten mechanischen Leistung zum Herstellen von Strom und durch Zuführen mindestens eines Teils des Stroms zu den elektrischen Booster-Elektroden (4) des Ofens (1).

2. Verfahren nach Anspruch 1, wobei in Schritt (c) das Wärmeübertragungsfluid (33), das in Schritt (b) erwärmt wurde, zuerst zum Vorwärmen des mindestens einen Reaktionsmittels verwendet wird, wobei mindestens ein vorgewärmtes Reaktionsmittel und temperiertes erwärmtes Wärmeübertragungsfluid (15) bei einer Temperatur von höchstens 650 °C, vorzugsweise von 200 °C bis 650 °C erhalten wird, und wobei danach das temperierte erwärmte Wärmeübertragungsfluid (15) als Wärmequelle dem Rankine-Kreislauf zugeführt wird.

3. Verfahren nach Anspruch 1, wobei in Schritt (c) das Wärmeübertragungsfluid (33), das in Schritt (b) erwärmt wurde, zuerst dem Rankine-Kreislauf als Wärmequelle zugeführt wird, um mechanische Leistung zu erzeugen und um ein temperiertes erwärmtes Wärmeübertragungsfluid zu erhalten, und wobei danach das temperierte erwärmte Wärmeübertragungsfluid verwendet wird, um das mindestens eine Reaktionsmittel vorzuwärmen.

4. Verfahren nach Anspruch 1 oder 2, wobei das Erwärmen des Wärmeübertragungsfluids in Schritt (b) und das Vorwärmen des Reaktionsmittels in Schritt (c) in getrennten Wärmeübertragungsanlagen (20, 30) erfolgen.

5. Verfahren nach einem der vorstehenden Ansprüche, wobei das Wärmeübertragungsfluid (22, 33, 15) ein gasförmiges Wärmeübertragungsfluid ist.

6. Verfahren nach einem der vorstehenden Ansprüche, wobei Schritt (c) das Vorwärmen sowohl des sauerstoffreichen Oxidationsmittels (32) als auch des Brennstoffs (31) umfasst und wobei danach sowohl das vorgewärmte sauerstoffreiche Oxidationsmittel (5) als auch der vorgewärmte Brennstoff (6) als Verbrennungsreaktionsmittel dem Ofen (1) zugeführt werden.

7. Verfahren nach einem der vorstehenden Ansprüche, wobei das sauerstoffreiche Oxidationsmittel (32, 5) einen Sauerstoffgehalt von 80 Vol.-% bis 100 Vol.-%, vorzugsweise von mindestens 90 Vol.-%, mehr bevorzugt von mindestens 95 Vol.-%, am meisten bevorzugt von mindestens 99 Vol.-% aufweist.

8. Verfahren zum Schmelzen von Glas nach einem der vorstehenden Ansprüche.

9. Anlage zum Schmelzen von verglasbarem Material, umfassend:
• einen flammenbefeuerten Ofen (1), aufweisend einen Rauchgasablass, mindestens einen Brennstoffeinlass, mindestens einen Verbrennungsoxidationsmittel-Einlass und elektrische Booster-Elektroden,
• einen Primärwärmetauscher (20), aufweisend einen Rauchgaseinlass, einen Rauchgasauslass, einen Wärmeübertragungsfluid-Einlass und einen Wärmeübertragungsfluid-Auslass, wobei der Rauchgaseinlass in Fluidverbindung mit dem Rauchgasablass des Ofens (1) steht, wobei der Wärmeübertragungsfluid-Einlass in Fluidverbindung mit einer Wärmeübertragungsfluid-Quelle steht, wobei der Primärwärmetauscher (20) zum Erwärmen des Wärmeübertragungsfluids (22) durch Wärmeaustausch mit dem Rauchgas (7) aus dem Ofen (1) ausgelegt ist,
• einen Sekundärwärmetauscher (30), aufweisend einen Wärmeübertragungsfluid-Einlass, einen Wärmeübertragungsfluid-Auslass, einen Reaktionsmittel-Einlass und einen Reaktionsmittel-Auslass, wobei der Reaktionsmittel-Einlass in Fluidverbindung mit einer Reaktionsmittelquelle steht, ausgewählt aus sauerstoffreichem Oxidationsmittel (32) und Brennstoff (31), wobei der Sekundärwärmetauscher (30) zum Vorwärmen des Reaktionsmittels (32, 31) durch Wärmeaustausch mit dem Wärmeübertragungsfluid (33) ausgelegt ist, wobei, wenn das Reaktionsmittel Brennstoff (31) ist, der Reaktionsmittel-Auslass in Fluidverbindung mit einem Brennstoffeinlass des Ofens (1) steht und wobei, wenn das Reaktionsmittel sauerstoffreiches Oxidationsmittel (32) ist, der Reaktionsmittel-Auslass in Fluidverbindung mit einem Verbrennungsoxidationsmittel-Einlass des Ofens (1) steht,
• einen Rankine-Kreislauf zum Erzeugen von mechanischer Leistung und zum Betrieb mit einem Arbeitsfluid (13) und umfassend einen Tertiärwärmetauscher (14), aufweisend einen Wärmeübertragungsfluid-Einlass, einen Wärmeübertragungsfluid-Auslass, einen Arbeitsfluid-Einlass und einen Arbeitsfluid-Auslass, wobei der Wärmeübertragungseinlass des Tertiärwärmetauschers (14) in Fluidverbindung mit dem Wärmeübertragungsfluid-Auslass des Sekundärwärmetauschers (30) steht, wobei der Tertiärwärmetauscher (14) zum Erwärmen des Arbeitsfluids (13) durch Wärmeaustausch mit dem Wärmeübertragungsfluid (15) ausgelegt ist,
• einen Stromgenerator (10), der mit dem Rankine-Kreislauf verbunden ist und zum Umwandeln mindestens eines Teils der erzeugten mechanischen Leistung in Strom ausgelegt ist,
wobei der Stromgenerator (10) mit den Booster-Elektroden verbunden ist, um diesen Strom zuzuführen und
wobei entweder:
• der Wärmeübertragungsfluid-Einlass des Sekundärwärmetauschers (30) in Fluidverbindung mit dem Wärmeübertragungsfluid-Auslass des Primärwärmetauschers (20) steht und der Wärmeübertragungsauslass des Sekundärwärmetauschers (30) in Fluidverbindung mit dem Wärmeübertragungsfluid-Einlass des Tertiärwärmetauschers (14) steht, oder
• der Wärmeübertragungsfluid-Einlass des Tertiärwärmetauschers (14) in Fluidverbindung mit dem Wärmeübertragungsfluid-Auslass des Primärwärmetauschers (20) steht und der Wärmeübertragungsauslass des Tertiärwärmetauschers (14) in Fluidverbindung mit dem Wärmeübertragungsfluid-Einlass des Sekundärwärmetauschers (30) steht.

10. Anlage nach Anspruch 9, wobei die Wärmeübertragungsfluid-Quelle (22) eine Quelle eines gasförmigen Wärmeübertragungsfluids ist.

11. Anlage nach Anspruch 9 oder 10, wobei der Sekundärwärmetauscher (30) einen ersten Reaktionsmittel-Einlass, einen zweiten Reaktionsmittel-Einlass, einen ersten Reaktionsmittel-Auslass und einen zweiten Reaktionsmittel-Auslass aufweist, wobei der erste Reaktionsmittel-Einlass in Fluidverbindung mit einer Quelle eines sauerstoffreichen Oxidationsmittels (32) steht und der zweite Reaktionsmittel-Einlass in Fluidverbindung mit einer Brennstoffquelle (31) steht, wobei der Sekundärwärmetauscher (30) zum Vorwärmen von sauerstoffreichem Oxidationsmittel (32) und Brennstoff (31) durch Wärmeaustausch mit dem Wärmeübertragungsfluid (33) ausgelegt ist, wobei der erste Reaktionsmittel-Auslass in Fluidverbindung mit einem Verbrennungsoxidationsmittel-Einlass des Ofens (1) steht und der zweite Reaktionsmittel-Auslass in Fluidverbindung mit einem Brennstoffeinlass des Ofens (1) steht.

12. Anlage nach einem der Ansprüche 9 bis 11, umfassend einen sekundären Oxidationsmittel-Wärmetauscher und einen sekundären Brennstoff-Wärmetauscher,
- wobei der sekundäre Oxidationsmittel-Wärmetauscher einen Reaktionsmittel-Einlass in Fluidverbindung mit einer Quelle eines sauerstoffreichen Oxidationsmittels und einen Reaktionsmittel-Auslass in Fluidverbindung mit einem Verbrennungsoxidationsmittel-Einlass des Ofens (1) aufweist,
- wobei der sekundäre Brennstoff-Wärmetauscher einen Reaktionsmittel-Einlass in Fluidverbindung mit einer Brennstoffquelle und einen Reaktionsmittel-Auslass in Fluidverbindung mit einem Brennstoffeinlass des Ofens (1) aufweist.

13. Anlage nach einem der Ansprüche 9 bis 12, wobei der Ofen (1) ein Glasschmelzofen ist.

## Revendications

1. Processus pour faire fondre une matière pouvant être vitrifiée comprenant les étapes de :
a) fonte de matière pouvant être vitrifiée dans un four alimenté à la flamme (1) équipé d'électrodes de chauffage (4),
b) récupération de la chaleur provenant de gaz brûlés chauds (7) évacués du four (1) à une température d'au moins 1 100 °C, de préférence entre 1100 °C et 1 500 °C en chauffant un fluide de transfert de chaleur (22) à une température d'au moins 600 °C, de préférence entre 600 °C et 800 °C, par échange de chaleur entre le fluide de transfert de chaleur et lesdits gaz brûlés chauds (7) ; et
c) utilisation de la chaleur récupérée depuis les gaz brûlés chauds (7) dans l'étape (b) pour chauffer le four alimenté à la flamme (1) :
• en préchauffant au moins un réactif sélectionné à partir d'un oxydant riche en oxygène (32) et d'un carburant (31) par échange de chaleur entre ledit au moins un réactif (32, 31) et le fluide de transfert de chaleur (33) chauffé dans l'étape (b), afin d'obtenir un réactif préchauffé (5, 6) et fournissant le réactif préchauffé (5, 6) ainsi obtenu en tant que réactif de combustion au four (1), et
• en fournissant le fluide de transfert de chaleur (33) chauffé dans l'étape (b) en tant que source de chaleur à un cycle de Rankine afin de produire de la puissance mécanique à partir de celui-ci, en utilisant au moins une partie et de préférence la totalité de ladite puissance mécanique pour produire de l'électricité et en fournissant au moins une partie de l'électricité aux électrodes de chauffage (4) du four (1).

2. Processus selon la revendication 1 dans lequel, dans l'étape (c), le fluide de transfert de chaleur (33) chauffé dans l'étape (b) est d'abord utilisé pour préchauffer l'au moins un réactif, obtenant de ce fait au moins un réactif préchauffé et un fluide de transfert de chaleur chauffée tempéré (15) à une température d'au plus 650 °C, de préférence de 200 °C à 650 °C, et dans lequel après cela le fluide de transfert de chaleur chauffé tempéré (15) est fourni en tant que source de chaleur au cycle de Rankine.

3. Processus selon la revendication 1 dans lequel, dans l'étape (c), le fluide de transfert de chaleur (33) chauffé dans l'étape (b) est d'abord fourni en tant que source de chaleur au cycle de Rankine afin de produire une puissance mécanique et obtenir un fluide de transfert de chaleur chauffé tempérée et dans lequel après cela le fluide de transfert de chaleur chauffée tempéré est utilisé pour préchauffer l'au moins un réactif.

4. Processus selon la revendication 1 ou 2, dans lequel le chauffage du fluide de transfert de chaleur dans l'étape (b) et le préchauffage du réactif dans l'étape (c) ont lieu dans des installations de transfert de chaleur distinctes (20, 30).

5. Processus selon l'une quelconque des revendications précédentes, dans lequel le fluide de transfert de chaleur (22, 33, 15) est un fluide de transfert de chaleur gazeux.

6. Processus selon l'une quelconque des revendications précédentes, dans lequel l'étape (c) comprend le préchauffage tant d'un oxydant riche en oxygène (32) que d'un carburant (31) et dans lequel après cela tant l'oxydant riche en oxygène préchauffé (5) que le carburant préchauffé (6) sont fournis en tant que réactifs de combustion au four (1).

7. Processus selon l'une quelconque des revendications précédentes, dans lequel l'oxydant riche en oxygène (32, 5) a une teneur en oxygène allant de 80% en volume à 100% en volume, de préférence d'au moins 90% en volume, plus de préférence d'au moins 95% en volume, le plus de préférence d'au moins 99% en volume.

8. Processus pour faire fondre du verre selon l'une quelconque des revendications précédentes.

9. Installation pour faire fondre une matière pouvant être vitrifiée comprenant :
• un four de fusion alimenté à la flamme (1) ayant un échappement de gaz brûlés, au moins une entrée de carburant, au moins une entrée d'oxydant de combustion et des électrodes de chauffage,
• un échangeur de chaleur primaire (20) ayant une entrée de gaz brûlés, une sortie de gaz brûlés, une entrée de fluide de transfert de chaleur et une sortie de fluide de transfert de chaleur, l'entrée de gaz brûlés étant en connexion à fluide avec l'échappement de gaz brûlés du four (1), l'entrée de fluide de transfert de chaleur étant en connexion à fluide avec une source de fluide de transfert de chaleur, l'échangeur de chaleur primaire (20) étant conçu pour chauffer le fluide de transfert de chaleur (22) par échange de chaleur avec les gaz brûlés (7) provenant du four (1),
• un échangeur de chaleur secondaire (30) ayant une entrée de fluide de transfert de chaleur, une sortie de fluide de transfert de chaleur, une entrée de réactif et une sortie de réactif, l'entrée de réactif étant en connexion à fluide avec une source d'un réactif sélectionné à partir d'un oxydant riche en oxygène (32) et d'un carburant (31), l'échangeur de chaleur secondaire (30) étant conçu pour préchauffer le réactif (32, 31) par échange de chaleur avec le fluide de transfert de chaleur (33), dans lequel, si le réactif est du carburant (31), la sortie de réactif est en connexion à fluide avec une entrée de carburant du four (1) et dans lequel si le réactif est un oxydant riche en oxygène (32), la sortie de réactif est en connexion à fluide avec une entrée d'oxydant de combustion du four (1),
• un cycle de Rankine pour produire de la puissance mécanique et fonctionner avec un fluide de travail (13) et comprenant un échangeur de chaleur tertiaire (14) ayant une entrée de fluide de transfert de chaleur, une sortie de fluide de transfert de chaleur, une entrée de fluide de travail et une sortie de fluide de travail, l'entrée de transfert de chaleur de l'échangeur de chaleur tertiaire (14) étant en connexion à fluide avec la sortie de fluide de transfert de chaleur de l'échangeur de chaleur secondaire (30), l'échangeur de chaleur tertiaire (14) étant conçu pour chauffer le fluide de travail (13) par échange de chaleur avec le fluide de transfert de chaleur (15),
• un générateur d'électricité (10) relié au cycle de Rankine et conçu pour transformer au moins une partie de la puissance mécanique produite en électricité
dans laquelle lequel le générateur d'électricité (10) est relié aux électrodes de chauffage afin de fournir de l'électricité à celles-ci, et
dans laquelle soit :
• l'entrée de fluide de transfert de la chaleur de l'échangeur de chaleur secondaire (30) est en connexion à fluide avec la sortie de fluide de transfert de chaleur de l'échangeur de chaleur primaire (20) et la sortie de transfert de chaleur de l'échangeur de chaleur secondaire (30) est en connexion à fluide avec l'entrée de fluide de transfert de chaleur de l'échangeur de chaleur tertiaire (14), ou
• l'entrée de fluide de transfert de chaleur de l'échangeur de chaleur tertiaire (14) est en connexion à fluide avec la sortie de fluide de transfert de chaleur de l'échangeur de chaleur primaire (20) et la sortie de transfert de chaleur de l'échangeur de chaleur tertiaire (14) est en connexion à fluide avec l'entrée de fluide de transfert de chaleur de l'échangeur de chaleur secondaire (30).

10. Installation selon la revendication 9, dans laquelle la source de fluide de transfert de chaleur (22) est une source d'un fluide de transfert de chaleur gazeux.

11. Installation selon la revendication 9 ou 10, dans laquelle l'échangeur de chaleur secondaire (30) a une première entrée de réactif, une seconde entrée de réactif, une première sortie de réactif et une seconde sortie de réactif, la première entrée de réactif étant en connexion à fluide avec une source d'oxydant riche en oxygène (32) et la seconde entrée de réactif étant en connexion à fluide avec une source de carburant (31), l'échangeur de chaleur secondaire (30) étant conçu pour préchauffer l'oxydant riche en oxygène (32) et le carburant (31) par échange de chaleur avec le fluide de transfert de chaleur (33), dans laquelle la première sortie de réactif est en connexion à fluide avec une entrée d'oxydant de combustion du four (1) et la seconde sortie de réactif est en connexion à fluide avec une entrée de carburant du four (1).

12. Installation selon l'une quelconque des revendications 9 à 11, comprenant un échangeur de chaleur secondaire d'oxydant et un échangeur de chaleur secondaire de carburant,
- l'échangeur de chaleur secondaire d'oxydant ayant une entrée de réactif en connexion à fluide avec une source d'oxydant riche en oxygène et une sortie de réactif en connexion à fluide avec une entrée d'oxydant de combustion du four (1),
- l'échangeur de chaleur secondaire de carburant ayant une entrée de réactif en connexion à fluide avec une source de carburant et une sortie de réactif en connexion à fluide avec une entrée de carburant du four (1).

13. Installation selon l'une quelconque des revendications 9 à 12, dans laquelle le four (1) est un four de fusion de verre.
